# EUROPEAN PATENT APPLICATION

(11) **EP 4 618 454 A1**
(43) Date of publication of application: **17.09.2025**
(21) Application number: 24163549.9
(22) Date of filing: 14.03.2024
(51) Int. Cl.: H04L 1/00, H04L 47/10, H04L 67/12, G06F 40/30, G10L 19/005, G06N 3/045, G06N 20/00, G05B 19/418

(54) **SYSTEM AND METHOD FOR RECONSTRUCTING PACKET DATA USING A LARGE LANGUAGE MODEL**

(71) Applicant: Siemens Aktiengesellschaft, 80333 München (DE)
(72) Inventor: PV, Hemanth, 676319 PARAPPANANGADI, Kerala (IN)
(74) Representative: HKW Intellectual Property PartG mbB

(57) **Abstract**

The invention relates to a method for reconstructing packet data at an Internet of Things (IoT) gateway device is disclosed. The method comprises receiving (402) input packet data comprising a sequence of packets. The method also comprises identifying (404), using a pre-trained Large Language Model (LLM), one or more missing or corrupted packets in the sequence of packets by processing the received input packet data based on at least one of a pre-defined dataset and a pattern of the sequence of packets. The method further comprises reconstructing (406), using the pre-trained LLM, the identified one or more missing or corrupted packets based on at least one of the pre-defined dataset and information corresponding to one or more of remaining packets in the sequence of packets.

## Description

The present invention relates to an Internet of Things (IoT) network architecture, and more particularly relates to a system and a method for reconstructing packet data at an IOT gateway device.

In the realm of the IoT communication environment/architecture, the IoT gateways play a crucial role as a connector between edge devices (like sensors and smart gadgets) and the internet or a cloud. Primarily, the IoT gateways are configured to collect, process, and transmit data from the edge devices to the cloud or a central server. This includes performing tasks such as data filtering, aggregation, and analysis.

In some cases, the IoT gateways encounter issues such as receiving incomplete or corrupted data from the edge devices. Such issues may be a result of factors such as network congestion, packet loss, or interference, which cause data packets to be dropped or delayed during transmission. During such conditions, the IoT gateways discard said incomplete or broken packets to ensure the integrity of the data being processed. However, such discarding of the packets may result in a reduction in the total amount of data to be transmitted and thereby reduces reliability of the IoT gateways.

Some solutions provided to overcome the aforementioned issues include implementing conventional packet reconstruction and/or error correction techniques and protocols at the IoT gateways. However, such conventional techniques often fall short of meeting efficiency standards expected of the IoT gateways. Additionally, since these conventional techniques are predefined, such techniques fail to adapt to the dynamic demands inherent in the IoT architectures. There is a requirement for solutions to efficiently transmit packets via the IoT gateways while maintaining the required efficiency.

In particular, there is a need for a system and method to overcome the above-identified issues.

According to one embodiment of the present invention, a method for reconstructing packet data at the IoT gateway device is disclosed. The method comprises receiving input packet data comprising a sequence of packets. Further, the method comprises identifying, using a pre-trained Large Language Model (LLM), one or more missing or corrupted packets in the sequence of packets by processing the received input packet data based on at least one of a pre-defined dataset and a pattern of the sequence of packets. The method further comprises reconstructing, using the pre-trained LLM, the identified one or more missing or corrupted packets based on at least one of the pre-defined datasets and information corresponding to one or more of remaining packets in the sequence of packets. The disclosed method allows mitigating an impact of transmission errors, improving a reliability of data transmitted to the cloud, and reducing a need for retransmission or resending of data.

In an embodiment, the method includes transmitting, to a server, the reconstructed one or more missing or corrupted packets with the remaining packets in the sequence of packets. Thus, the method enables more efficient use of network resources and enables faster response times and decision-making based on complete and accurate data.

Furthermore, in identifying the one or more missing or corrupted packets, the method comprises identifying one or more features of the sequence of packets, wherein the one or more features comprises at least one of a sequence number, a time of arrival, checksums, a state of packets, and a transmission protocol. The method also comprises determining a pattern of the sequence of packets based on the identified one or more features and the pre-defined dataset. The method further includes classifying each of the packets in the sequence of packets into at least one of a well-defined packet, noise, and a missing or corrupted packet based on the identified pattern of the sequence of packets. The disclosed method enables effective detection of missing or corrupted packets so as to effectively reconstruct the packets and enhance reliability of the data transmission.

Furthermore, in reconstructing, using the pre-trained LLM, the identified one or more missing or corrupted packets, the method comprises determining contextual information of the identified one or more missing or corrupted packets based on at least one of the information corresponding to one or more of the remaining packets in the sequence of packets and the identified one or more features of the sequence of packets. The method also comprises reconstructing the identified one or more missing or corrupted packets based on the identified contextual information and the pre-defined dataset. The method considers contextual information for reconstruction of the missing or broken packets so as to enable accurate and fast response.

Further, the contextual information comprises at least one of metadata, timestamps, and device identifiers. The use of contextual information optimizes the response of the server to the received reconstructed packets.

According to another embodiment of the present invention, an IoT gateway device for reconstructing packet data is disclosed. The gateway device includes a memory and one or more processors communicatively coupled to the memory. The memory includes a plurality of modules in the form of programmable instructions executable by the one or more processors. The plurality of modules comprises a receiving module configured to receive input packet data comprising a sequence of packets. The plurality of modules also comprises an identification module configured to identify, using a pre-trained Large Language Model (LLM), one or more missing or corrupted packets in the sequence of packets by processing the received input packet data based on at least one of a pre-defined dataset and a pattern of the sequence of packets. Further, the plurality of modules comprises a reconstruction module configured to reconstruct, using the pre-trained LLM, the identified one or more missing or corrupted packets based on at least one of the pre-defined datasets and information corresponding to remaining packets in the sequence of packets.

In an embodiment, the plurality of modules further comprises a transmitting module configured to transmit, to a server, the reconstructed one or more missing or corrupted packets with the remaining packets.

Further, to identify the one or more missing or corrupted packets, the identification module is configured to identify one or more features of the sequence of packets, wherein the one or more features comprises at least one of a sequence number, a time of arrival, checksums, a state of packets, and a transmission protocol. The identification module is also configured to determine a pattern of the sequence of packets based on the identified one or more features and the pre-defined dataset. The identification module is further configured to classify each of the packets in the sequence of packets into at least one of a well-defined packet, noise, and a missing or corrupted packet based on the identified pattern of the sequence of packets.

Further, to reconstruct, using the pre-trained LLM, the identified one or more missing or corrupted packets, the reconstruction module is further configured to determine contextual information of the identified one or more missing or corrupted packets based on at least one of the information corresponding to remaining packets in the sequence of packets and the identified one or more features of the sequence of packets. The reconstruction module is also configured to reconstruct the identified one or more missing or corrupted packets based on the identified contextual information and the pre-defined dataset.

According to another embodiment of the present invention, a cloud computing environment is disclosed. The environment includes one or more IoT devices, an IoT gateway device as discussed throughout the present invention, and a cloud server communicatively coupled to the IoT device via a network. The IoT gateway device is configured to perform one or more methods, as discussed throughout the present invention.

According to another embodiment of the present invention, a computer-program product is disclosed. The computer-program product has machine-readable instructions stored therein, that when executed by one or more processors, cause the one or more processors to perform one or more methods, as discussed throughout the present invention.

According to another embodiment of the present invention, a non-transitory computer-readable medium is disclosed. The non-transitory computer-readable medium is encoded with executable instructions, that when executed by one or more processors, cause the one or more processors to perform one or more methods, as discussed throughout the present invention.

To further clarify the advantages and features of the present invention, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail with the accompanying drawings.

These and other features, aspects, and advantages of the present invention will become better understood when the following detailed description is read with reference to the accompanying drawings in which like characters represent like parts throughout the drawings, wherein:
FIG. 1 illustrates an overview of an IoT environment comprising an IoT gateway device for reconstructing packet data, according to an embodiment of the present invention;
FIG. 2 illustrates a detailed block diagram of the IoT gateway device, according to an embodiment of the present invention;
FIG. 3 illustrates a sequence flow for reconstructing packet data by the IoT gateway device, according to an embodiment of the present invention; and
FIG. 4 illustrates an exemplary process flow depicting a method for reconstructing packet data at the IoT gateway device, according to an embodiment of the present invention; and
FIG. 5 illustrates an architecture representation of a Large Language Model, according to an embodiment of the present invention.

Further, skilled artisans will appreciate that elements in the drawings are illustrated for simplicity and may not have necessarily been drawn to scale. For example, the flow charts illustrate the method in terms of the most prominent steps involved to help improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components preceded by "comprises... a" does not, without more constraints, preclude the existence of other devices or other sub-systems or other elements or other structures or other components or additional devices or additional sub-systems or additional elements or additional structures or additional components.

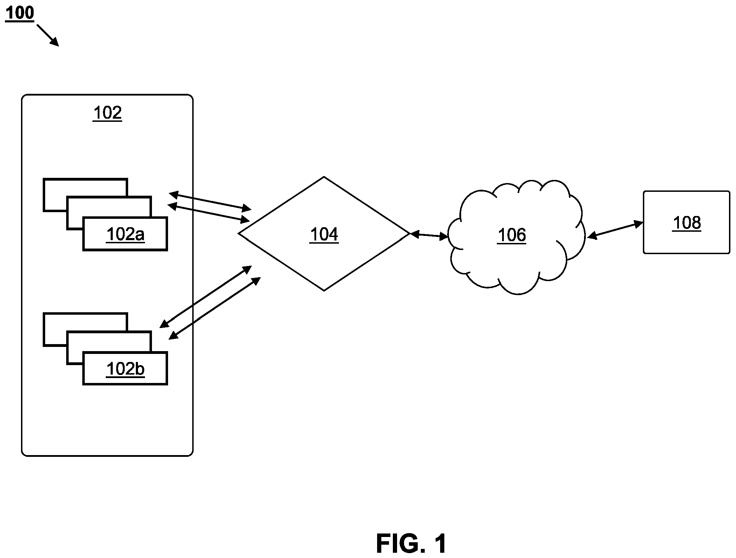

FIG. 1 illustrates an overview of an IoT environment 100 comprising an IoT gateway device 104 for reconstructing packet data, according to an embodiment of the present invention. The IoT environment 100 includes a plurality of edge devices 102, the IoT gateway device 104, a cloud network 106, and one or more central servers 108. Each of the plurality of edge devices 102, the IoT gateway device 104, the cloud network 106 (hereinafter referred to as "the cloud 106"), and the one or more central servers 108 is communicably coupled to each other. The plurality of edge devices 102 include one or more IoT devices 102a or one or more sensors 102b. Examples of the one or more IoT devices may include, but are not limited to, smart home security alarms, wearable fitness devices, smart connected appliances, smart lighting systems, and so forth. Example of the one or more sensors 102b may include, but are not limited to, temperature sensors, humidity sensors, motion sensors, light sensors, pressure sensors, gas sensors, sound sensors, water sensors, vibration sensors, and the like that are connected to the IoT gateway device 104.

The edge devices 102 are configured to receive/collect user inputs and/or collect user-related data to provide a desired response to a user. The user inputs may include user voice input commands and/or one or more manual inputs provided by the user to the one or more edge devices 102. The user-related data may include information collected from an environment of the user that may include, but not limited to, temperature, humidity, motion, light, etc. In an exemplary embodiment, the edge devices 102 may transmit the collected data to the cloud network and/or the one or more central server 108 via the IoT gateway device 104 for the processing. In one embodiment, such processing may involve filtering out noise, aggregating data over time, or performing more complex computations to derive meaningful insights from the collected raw data.

In an embodiment, the edge devices 102 are connected with the IoT gateway device 104 via any suitable communication technology such as, but not limited to, Wi-Fi, Bluetooth, cellular networks, etc. The edge devices 102 may implement any suitable communication protocol to transmit the collected data to the IoT gateway device 104 in the form of packets. Examples of such communication protocol may include, Hypertext Transfer Protocol (HTTP), Transmission Control Protocol (TCP), User Datagram Protocol (UDP), Internet Protocol (IP), and the like.

The IoT gateway device 104 acts as an intermediary between the edge devices 102, and the cloud 106 or the one or more central servers 108. In an embodiment, the IoT gateway device 104 supports multiple communication protocols to bridge the gap between diverse IoT/edge devices and standardize data communication supported by the cloud 106 and/or the one or more central servers 108. The IoT gateway device 104 is configured to collect data from the plurality of edge devices, aggregate the collected data, and transmit to the aggregated data to the cloud 106 and/or the one or more central servers 108 for further processing of the collected data. In an exemplary embodiment, the IoT gateway device 104 is configured to perform operations such as data filtering, analysis, and preprocessing tasks based on the collected data. By performing such operations, the IoT gateway device 104 reduces latency, improves responsiveness, and enables real-time decision-making without relying solely on cloud resources such as the cloud 106 and/or the one or more central servers 108.

In some embodiments, the IoT gateway device 104 also implements security features such as, but not limited to, encryption, authentication, access control, and firewall functionalities, to protect data integrity, confidentiality, and privacy. In an embodiment, the IoT gateway device 104 detects and/or mitigates security threats or anomalies in the IoT environment 100. The IoT gateway device 104 may be implemented with Machine Learning (ML) models and/or data analytics techniques to process the data received from the edge devices 102. Thus, the IoT gateway device 104 plays a pivotal role in enabling connectivity, interoperability, security, and intelligence in the IoT environment 100 by bridging the gap between the edge devices 102, the cloud 106, and the one or more central servers 108.

The cloud 106 includes an interconnected infrastructure, services, and resources provided by cloud computing platforms to support IoT applications and deployments in the IoT environment. The cloud infrastructure includes components such as, but not limited to, servers, storage systems, networking equipment, and data centres, that act as a backbone for the cloud computing platforms. The cloud 106 provides connectivity support to the edge devices 102 to securely transmit data to and from the cloud 106 and/or the one or more central servers 108. In some embodiments, the cloud 106 implements robust security measures to protect IoT data, applications, and communication channels from cyber threats and unauthorized access.

The one or more central servers 108 are configured to receive the data from the IoT gateway device 102. Thereafter, the one or more central servers 108 are configured to process and analyze the received data to generate appropriate responses. The one or more central servers 108 correspond to core computing infrastructure configured to manage and coordinate communication and data processing across the IoT environment 100.

In some instances, the IoT gateway device 104 may receive corrupted and/or broken packets corresponding to the data collected by the edge devices 102. Such corrupted and/or broken packets may be the result of factors such as, but not limited to, network congestion, packet loss, or interference. In particular, when the data packet corresponding to the collected data is dropped or delayed during transmission, there are chances that the IoT gateway device 104 may receive corrupted and/or broken packets. In general, the IoT gateway device 104 discards such corrupted and/or broken packets. However, this leads to incorrect responses from the cloud 106 and/or the one or more central server 108, thereby resulting in a bad user experience. Moreover, discarding of packets may reduce the reliability of the IoT gateway device 104.

In an exemplary embodiment, the IoT gateway device 104 does not discard such corrupted and/or broken packets, instead the IoT gateway device 104 processes and reconstructs such corrupted and/or broken packets to improve the overall performance of the IoT environment 100. In an embodiment, the IoT gateway device 104 may implement a Large Language Model (LLM) to process and reconstruct such corrupted and/or broken packets. In particular, the IoT gateway device 104 may be configured with one or more fine-tuned LLM to effectively identify and correct errors and/or anomalies in the data received from the edge devices 102. This also reduces communication errors and increases data integrity at the IoT gateway device 104.

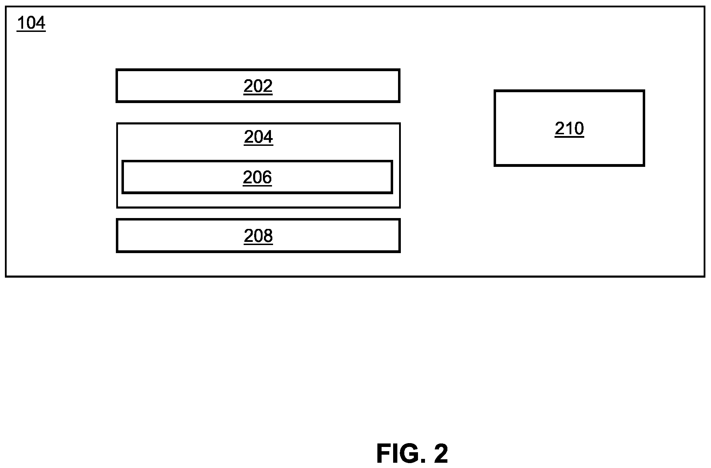

FIG. 2 illustrates a detailed block diagram of the IoT gateway device 104, according to an embodiment of the present invention. The IoT gateway device 104 may be configured to reconstruct packet data received from the edge devices 102. The IoT gateway device 104 includes one or more processors 202 and a memory 204. As a non-limiting example, the one or more processors 202 are a single processing unit or a set of units each including multiple computing units. The one or more processors 202 are implemented as one or more microprocessors, microcomputers, microcontrollers, digital signal processors, central processing units, state machines, logic circuitries, and/or any devices that manipulate signals based on operational instructions (computer-readable instructions) stored in the memory 204. Among other capabilities, the one or more processors 202 are configured to fetch and execute computer-readable instructions and data stored in the memory 204. The one or more processors 202 include one or a plurality of processors. The plurality of processors are further implemented as a general-purpose processor, such as a central processing unit (CPU), an application processor (AP), or the like, a graphics-only processing unit, such as a graphics processing unit (GPU), a visual processing unit (VPU), and/or an AI-dedicated processor such as a neural processing unit (NPU). The plurality of processors control the processing of the input data in accordance with a predefined operating rule or an artificial intelligence (AI) model stored in the memory 204. The predefined operating rule or the AI model is provided through training or learning.

The one or more processors 202 are disposed in communication with one or more input/output (I/O) devices (for instance the edge devices 102) via an Input/Output (I/O) interface 208. The I/O interface 208 employs communication code-division multiple access (CDMA), high-speed packet access (HSPA+), global system for mobile communications (GSM), long-term evolution (LTE), WiMax, or the like, etc. In another embodiment of the present invention, the I/O interface 208 employs an ethernet, an industrial wireless local area network (LAN), a process field bus (PROFIBUS), an actuator sensor (AS) interface, and the like.

In some embodiments, the memory 204 is communicatively coupled to the one or more processors 202. The memory 204 is configured to store instructions executable by the one or more processors 202. In one embodiment, the memory 204 communicates via a bus within the IoT gateway device 104. The memory 204 includes, but is not limited to, a non-transitory computer-readable storage media, such as various types of volatile and non-volatile storage media including, but not limited to, random access memory, read-only memory, programmable read-only memory, electrically programmable read-only memory, electrically erasable read-only memory, flash memory, magnetic tape or disk, optical media, and the like. In one example, the memory 204 includes a cache or random-access memory (RAM) for the one or more processors 202. In alternative examples, the memory 204 is separate from the one or more processors 202 such as a system memory, or other memory device. In one embodiment, the memory 204 may be an external storage device or a database for storing data. The memory 204 is operable to store instructions executable by the one or more processors 202. The functions, acts or tasks illustrated in the figures or described are performed by the programmed processor for executing the instructions stored in the memory 204. The functions, acts or tasks are independent of the particular type of instructions set, storage media, processor or processing strategy and may be performed by software, hardware, integrated circuits, firmware, micro-code, and the like, operating alone or in combination. Likewise, processing strategies include multiprocessing, multitasking, parallel processing, and the like.

The memory 204 includes a database 206 to store data. Further, the memory 204 includes an operating system for performing one or more tasks of the IoT gateway device 104, as performed by a generic operating system. In one embodiment, the database 206 is configured to store the information as required by the one or more processors 202 to perform one or more functions for reconstructing packet data as received from the edge devices 102.

Further, the present invention also contemplates a computer-program product that includes instructions or receives and executes instructions responsive to a propagated signal. Further, the instructions may be transmitted or received over a network via a communication port or interface or using a bus (not shown). The communication port or interface may be a part of the one or more processors 202 or may be a separate component. The communication port may be created in software or may be a physical connection in hardware. The communication port may be configured to connect with the network, the edge devices 102, and/or the cloud 106. For the sake of brevity, the architecture, and standard operations of the memory 204 and the one or more processors 202 are not discussed in detail.

In an exemplary embodiment, the IoT gateway device 104 may also include a fine-tuned (pre-trained) LLM 210 to process and reconstruct packet data received at the IoT gateway device 104 from the edge devices 102. In an embodiment, the fine-tuned LLM 210 may be implemented within the memory 204. The fine-tuned LLM 210 may enable the one or more processors 202 and/or the IoT gateway device 104 to detect corrupted and/or broken packets. Further, the fine-tuned LLM 210 may also enable the one or more processors 202 and/or the IoT gateway device 104 to reconstruct the detected corrupted and/or broken packets. The fine-tuned LLM 210 may be trained using well-defined and structured historical packets and/or messages. The fine-tuned LLM 210 may also consider contextual information associated with the corrupted and/or broken packets, and the structured historical packets to reconstruct the packet data. In an exemplary embodiment, the fine-tuned LLM 210 may be configured to understand the context and semantics of the data to improve packet reconstruction by prioritizing critical information. The fine-tuned LLM 210 may enable the one or more processors 202 to make intelligent decisions based on the contextual information of the packet data. In some embodiments, the IoT gateway device 104 may also implement additional error detection and correction techniques such as, but not limited to, forward error correction (FEC), automatic repeat request (ARQ), etc.

In an embodiment, the one or more processors 202 may analyze the corrupted and/or broken packets with respect to a plurality of structured packets/messages stored in the memory 204 using the fine-tuned LLM 210. Thereafter, the one or more processors 202 may identify similarity scores between the corrupted and/or broken packets and the stored plurality of structured packets/messages. The one or more processors 202 may compare the identified similarity scores with a predefined threshold to reconstruct the corrupted and/or broken packets effectively and accurately.

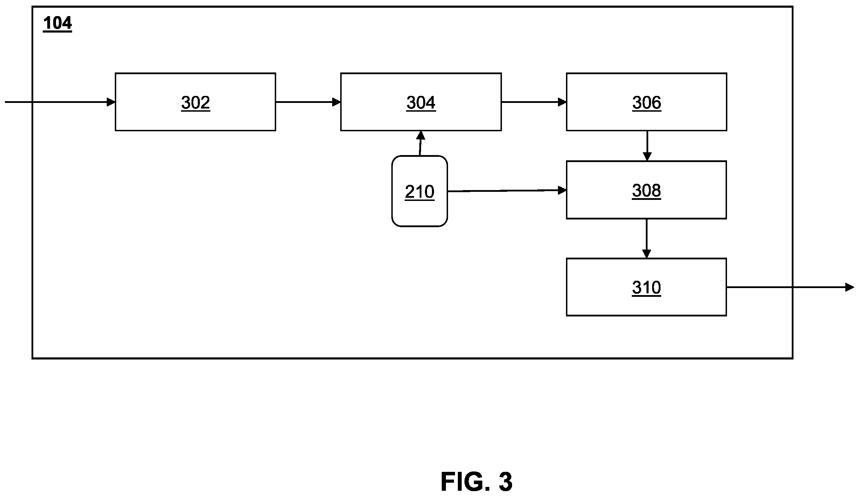

In an embodiment, the computer-program product, having machine-readable instructions stored therein, when executed by one or more processors 202, causes the one or more processors 202 to perform a method of reconstructing packet data at the IoT gateway device 104. The details on the method(s) performed by the one or more processors 202 have been elaborated in subsequent paragraphs at least with reference to FIGS. 3-4.

Further, the present invention also contemplates a non-transitory computer-readable medium encoded with executable instructions. The executable instructions, when executed by one or more processors 202, cause the one or more processors 202 to perform a method of reconstructing packet data at the IoT gateway device 104. The details on the method(s) performed by the one or more processors 202 have been elaborated in subsequent paragraphs at least with reference to FIGS. 3-4. Examples of computer-readable mediums include nonvolatile, hard-coded type mediums such as read-only memories (ROMs) or erasable, electrically programmable read-only memories (EEPROMs), and user-recordable type mediums such as floppy disks, hard disk drives and compact disk read-only memories (CD-ROMs) or digital versatile disks (DVDs).

In one embodiment, the memory 204 may include a plurality of modules 212 configured to perform the method of reconstructing packet data at the IoT gateway device 104. For instance, the memory 204 may include a receiving module 214 configured to receive input packet data comprising a sequence of packets. The receiving module 214 may receive the input packet data from the edge devices 102. The input packet data may correspond to user input received from the user and/or the user-related data as captured by the edge devices 102. For instance, the packet data may include information corresponding to a user's voice command such as "switch ON the heater at 7PM". The whole information i.e., the user voice command may be divided into a sequence of packets constituting the input packet data from the IoT gateway device 104.

The memory 204 may also include an identification module 216 configured to identify the one or more missing or corrupted packets in the sequence of packets by processing the input packet. The identification module 216 may be configured to use the fine-tuned LLM 210 to identify the one or more missing or corrupted packets in the sequence of packets based on at least one of a pre-defined dataset and a pattern of the sequence of packets. For instance, in the above scenario, one of the packets from the sequence of packets is dropped due to network failure. The dropped packet may include information related to time to switch ON the heater i.e., 7PM. Now, the identification module 216 may analyze all the remaining packets as received at the IoT gateway device 104 and identify that the timing information to switch ON the heater is missing, i.e., one or more packets is either dropped or got corrupted during the transmission.

The memory 204 may also include a reconstruction module 218 configured to reconstruct the identified one or more missing or corrupted packets based on at least one of the pre-defined datasets and information corresponding to remaining packets in the sequence of packets using the fine-tuned LLM 210. In the above scenario, the reconstruction module 218 may analyze the pre-defined dataset that may correspond to historical data associated with the user to reconstruct the data packet. The reconstruction module 218 may identify that the user has a regular request to turn ON the heater at 7PM based on the predefined dataset. Therefore, the reconstruction module 218 may reconstruct a packet including timing information, i.e., 7PM. The reconstruction module 218 may reconstruct the sequence of packets with the reconstructed packet to clearly define the intend of the user.

In some embodiments, the memory 204 may also include a transmitting module 220 configured to transmit the reconstructed one or more missing or corrupted packets with the remaining packets to the cloud 106 and/or the one or more central servers 108. The cloud 106 and/or the one or more central servers 108 may then operate based on the received reconstructed sequence of packets. In particular, the cloud 106 and/or the one or more central servers 108 may switch ON the heater at 7PM. This prevents effective response generation, reduces retransmission, and enhances reliability of the IoT gateway device 104.

In some embodiments, to identify the one or more missing or corrupted packets, the identification module 216 is configured to identify one or more features of the sequence of packets. The one or more features of the sequence of the packets may include, but are not limited to, a sequence number, a time of arrival, checksums, a state of packets, and a transmission protocol. Further, the identification module 216 may be configured to determine a pattern of the sequence of packets based on the identified one or more features and the pre-defined dataset. Thereafter, the identification module 216 may be configured to classify each of the packets in the sequence of packets into at least one of a well-defined packet, noise, and a missing or corrupted packet based on the identified pattern of the sequence of packets. For instance, based on the sequence number of packets, the identification module 216 may easily identify any dropped packet. Similarly, other features related to the sequence of the packets may be used by the identification module 216 to detect one or more corrupted and/or broken messages.

In some embodiments, to reconstruct the identified one or more missing or corrupted packets, the reconstruction module 218 may be configured to determine contextual information of the identified one or more missing or corrupted packets based on at least one of the information corresponding to remaining packets in the sequence of packets and the identified one or more features of the sequence of packets. The contextual information may include, but are not limited to, metadata, timestamps, and device identifiers. For instance, the contextual information may indicate a type of request from the user, or a type of information sensed by the user. Thereafter the reconstruction module 218 may be configured to reconstruct the identified one or more missing or corrupted packets based on the identified contextual information and the pre-defined dataset.

FIG. 3 illustrates a sequence flow 300 for reconstructing packet data by the IoT gateway device 104, according to an embodiment of the present invention. The sequence flow 300 starts at block 302 where the IoT gateway device 104 receives input packet data from the edge devices 102. As described above, the input packet data may correspond to the user input and/or the user-related data captured at the edge devices 102. In particular, at block 302, the IoT gateway device 104 may collect data from the edge devices 102 including the one or more IoT devices 102a and the one or more sensors 102b. The IoT gateway device 104 may receive data in the form of packets or a sequence of packets. However, such packets may be subject to transmission errors, such as packet loss or corruption.

At block 304, the IoT gateway device 104 analyzes the received input data to identify the state of received packets. At block 304, the IoT gateway device 104 may utilize the fine-tuned LLM 210 to analyze the received packets. The IoT gateway device 104 may determine patterns of the received packets using the fine-tuned LLM and predefined dataset to identify missing or corrupted packets. The IoT gateway device 104 may detect the state of a packet based on features such as packet sequence numbers, checksums, or other packet-related indicators. For instance, a missing packet sequence number may indicate that the packet is dropped during the transmission and the sequence of packets is corrupted or broken. Similarly, other checksums and packet-related indicators may be used by the IoT gateway device 104 to detect the corrupted and/or broken packets. In some embodiment, the IoT gateway device 104 may analyze the contextual information associated with each of the received packets using the fine-tuned LLM 210 to identify the corrupted and/or broken packets.

At block 306, the IoT gateway device 104 may classify each of the received packets as one of the well-defined packets, noise, and a missing or corrupted packet based on the identified pattern of the sequence of packets. In one embodiment, the IoT gateway device 104 may discard the noise and may consider the missing or corrupted packet for reconstruction.

At block 308, the IoT gateway device 104 may reconstruct the missing or corrupted packets. In an exemplary embodiment, based on analysis performed at block 304, the IoT gateway device 104 may use the fine-tuned LLM 210 to reconstruct missing or corrupted packets, as classified at block 306. The IoT gateway device 104 uses available information associated with neighboring packets, previously stored packets/information, and other redundancy mechanisms to fill in the gaps and generate a complete and accurate message. For example, in the case one of the sensors has transmitted information related to a change in temperature over a period of time. However, due to some transmission error, some of the packets may get dropped. In such a scenario, the IoT gateway device 104 using the fine-tuned LLM 210 analyzes the remaining packet to identify a trend indicating the change of the temperature. Based on said analysis, the IoT gateway device 104 may predict a value of temperature corresponding to missing packets and reconstruct such missing packets using the predicted value of temperature.

In some embodiments, the IoT gateway device 104 may analyze the received packets to identify a similarity score with one or more previously stored packets. Further based on the identified similarity score, the IoT gateway device 104 may reconstruct the missing and/or corrupted packets in the received packets. The IoT gateway device 104 may utilize one or more prestored packets wherever the similarity score is above a predefined threshold value, to reconstruct the missing and/or corrupted packets in the received packets. The threshold value may vary based on the different scenarios and or contextual information. In an exemplary embodiment, the IoT gateway device 104 may consider the similarity score and the contextual information as two essential elements and/or factors to reconstruct the missing or corrupted packets. For example, the received packets may correspond to a user command related to scheduling an alarm. However, one or more packets including the time to schedule the alarm, are missed out or corrupted. Therefore, the IoT gateway device 104 may analyze the received packets in view of one or more prestored packets and/or commands to identify a similarity score. The similarity score may depend on factors such as, but not limited to, a time of transmission, a transmitting device identifier, and so forth. Upon identifying the similarity score above a predefined threshold (for instance, greater than 70% and so on), the IoT gateway device 104 may use the one or more prestored packets and/or command to reconstruct the missing packets. For instance, the IoT gateway device 104 may predict that such command to schedule the alarm is for 6AM and accordingly the IoT gateway device 104 may reconstruct the missing or corrupted message based on such prediction. The IoT gateway device 104 may utilize the fine-tuned LLM 210 to reconstruct messages using any of the above discussed techniques.

At block 310, the IoT gateway device 104 may transmit the reconstructed packets along with the remaining packets to the cloud 106 and/or the one or more central servers 108. The cloud 106 and/or the one or more central servers 108 may then process, analyze, or store the packets.

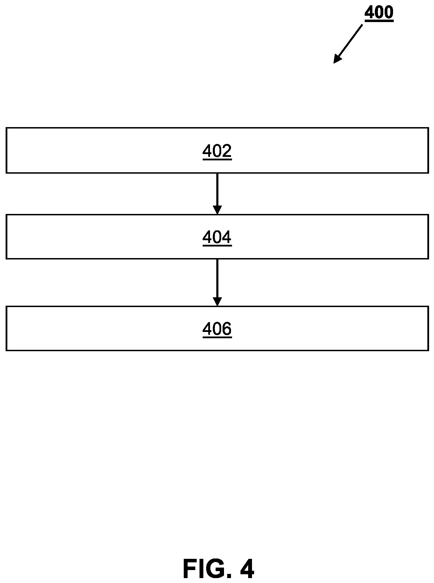

FIG. 4 illustrates an exemplary process flow depicting a method 400 for reconstructing packet data at the IoT gateway device 104. The method 400 is performed by the IoT gateway device 104, as shown in FIGS. 1-3. In an embodiment, the method 400 is performed by one or more processors 202 and/or the module 212 of the IoT gateway device 104.

At step 402, the input packet data comprising the sequence of packets is received by the IoT gateway device 104. In an embodiment, the input packet data may correspond to the user input and/or the user-related data collected at the edge devices 102 which is then transmitted to the IoT gateway device 104.

At step 404, one or more missing or corrupted packets in the sequence of packets are identified by processing the received input packet data based on at least one of a pre-defined dataset and a pattern of the sequence of packets. In an exemplary embodiment, the IoT gateway device 104 utilizes the fine-tuned LLM 210 to identify the one or more missing or corrupted packets.

In one embodiment, to identify the one or more missing or corrupted packets, one or more features of the sequence of packets are identified. Examples of the one or more features may include, but are not limited to, a sequence number, a time of arrival, checksums, a state of packets, and a transmission protocol. Thereafter, a pattern of the sequence of packets is determined based on the identified one or more features and the pre-defined dataset. Upon determining the pattern of the sequence of packets, each of the packets in the sequence of packets is classified in one of a well-defined packet, noise, and a missing or corrupted packet.

At step 406, the identified one or more missing or corrupted packets is reconstructed based on at least one of the pre-defined datasets and information corresponding to one or more of remaining packets in the sequence of packets. In an exemplary embodiment, the IoT gateway device 104 utilizes the fine-tuned LLM 210 to reconstruct the one or more missing or corrupted packets.

In one embodiment, to reconstruct the one or more missing or corrupted packets, contextual information of the identified one or more missing or corrupted packets is determined based on at least one of the information corresponding to one or more of the remaining packets in the sequence of packets and the identified one or more features of the sequence of packets. Thereafter, the identified one or more missing or corrupted packets are reconstructed based on the identified contextual information and the pre-defined dataset.

While the above steps shown in FIG. 4 are described in a particular sequence, the steps may occur in variations to the sequence in accordance with various embodiments of the present invention. Further, the details related to various steps of FIG. 4, which are already covered in the description related to FIGS. 1-3 are not discussed again in detail here for the sake of brevity.

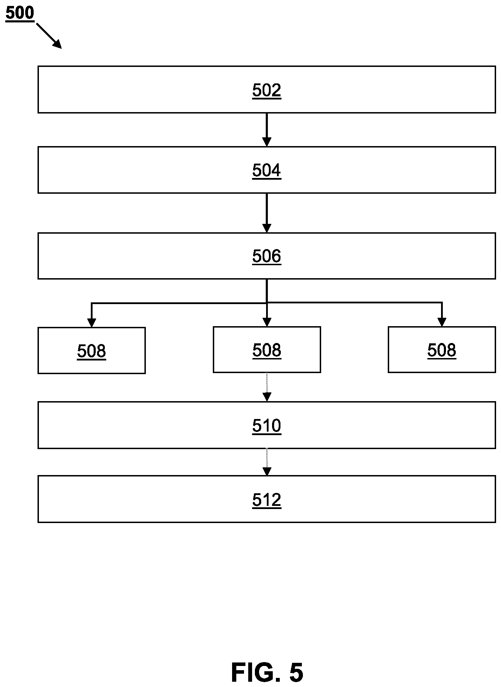

FIG. 5 illustrates an architecture representation of a Large Language Model (LLM) 500, according to an embodiment of the present invention. In one embodiment, the LLM 500 corresponds to the fine-tuned LLM 210.

At block 502, the LLM 500 receives raw input text. In an embodiment, the raw input text may correspond to information included in the received packet data at the IoT gateway device 104.

At block 504, the LLM 500 may tokenize the received raw input text by splitting the input text into individual tokens or sub words.

Next, at block 506, the LLM 500 may include a word embedding layer configured to convert each token into dense vector representation, capturing semantic meaning of the received input text.

Block 508 may represent transformer bocks of the LLM 500 which may act as core building blocks of the LLM 500. Each transformer block 500 may include, but is not limited to, self-attention mechanisms, feedforward neural networks, layer normalization, and residual connections.

At block 510, the LLM 500 may include performing token prediction i.e., to predict the likelihood of each token in the vocabulary being the next token in the sequence.

At block 512, the LLM 500 may generate the output text that may correspond to information to be included in the reconstructed packets.

In an exemplary embodiment, the LLM 500 can be fine-tuned on specific IoT tasks by further training on IoT related datasets with task-specific objectives. This allows the LLM 500 to adapt its learned representations to better suit the target task.

Thus, with the disclosed method, enables adaptability and flexibility. The disclosed IoT gateway device with fine-tuned LLM models may adapt to different types of errors or packet loss patterns. This flexibility allows the IoT gateway device to handle a wider range of scenarios and improve reconstruction accuracy.

Further, the disclosed IoT gateway device with fine-tuned LLM has the capability to understand the context and semantics of the data. This may enable packet reconstruction functionality to prioritize critical information, make intelligent decisions based on the available data, and improve the overall quality of reconstructed messages. Moreover, the disclosed IoT gateway device with fine-tuned LLM reduces overhead required for redundant bits or retransmission requests. In particular, a disclosed IoT gateway device with fine-tuned LLM reduces this overhead by performing more targeted and accurate packet reconstruction, minimizing the need for additional data transmission or error correction mechanisms.

Moreover, the disclosed method, enhances performance of the IoT gateway device by leveraging advanced natural language processing capabilities to reconstruct broken packets or messages. This results in improved accuracy and efficiency in packet reconstruction compared to traditional error correction techniques. Additionally, the disclosed IoT gateway device, can perform packet reconstruction at the edge, reducing latency and improving response times for critical applications.

Further, the disclosed IoT gateways with inbuilt the fine-tuned LLM enables real-time decision-making based on reconstructed messages. This can be particularly beneficial in time-sensitive applications where immediate actions or responses are required. The contextual understanding and intelligence of LLM models can support faster and more informed decision-making at the edge.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

### List of Reference

| | |
|---|---|
| IoT environment | 100 |
| Edge devices | 102 |
| IoT devices | 102a |
| One or more sensors | 102b |
| IoT gateway device | 104 |
| Cloud Network | 106 |
| One or more central servers | 108 |
| One or more processors | 202 |
| Memory | 204 |
| Database | 206 |
| I/O interface | 208 |
| Fine-tuned LLM | 210 |
| Modules | 212 |
| Receiving module | 214 |
| Identification module | 216 |
| Reconstruction module | 218 |
| Transmitting module | 220 |
| Sequence flow | 300 |
| Sequence flow steps | 302, 304, 306, 308, 310 |
| Method | 400 |
| Method steps | 402, 404, 406 |
| LLM | 500 |
| Architectural Blocks of the LLM | 502, 504, 506, 508, 510, 512 |

## Claims

1. A method (400) for reconstructing packet data at an Internet of Things (IoT) gateway device (104), the method (400) comprising:
receiving (402) input packet data comprising a sequence of packets;
identifying (404), using a pre-trained Large Language Model (LLM) (210), one or more missing or corrupted packets in the sequence of packets by processing the received input packet data based on at least one of a pre-defined dataset and a pattern of the sequence of packets; and
reconstructing (406), using the pre-trained LLM (210), the identified one or more missing or corrupted packets based on at least one of the pre-defined dataset and information corresponding to one or more of remaining packets in the sequence of packets.

2. The method (400) as claimed in claim 1, further comprising:
transmitting, to a server, the reconstructed one or more missing or corrupted packets with the remaining packets in the sequence of packets.

3. The method (400) as claimed in any of claims 1-2, wherein identifying the one or more missing or corrupted packets comprises:
identifying one or more features of the sequence of packets, wherein the one or more features comprises at least one of a sequence number, a time of arrival, checksums, a state of packets, and a transmission protocol;
determining a pattern of the sequence of packets based on the identified one or more features and the pre-defined dataset; and
classifying each of the packet in the sequence of packets into at least one of a well-defined packet, noise, and a missing or corrupted packet based on the identified pattern of the sequence of packets.

4. The method (400) as claimed in claim 3, wherein reconstructing, using the pre-trained LLM, the identified one or more missing or corrupted packets further comprises:
determining contextual information of the identified one or more missing or corrupted packets based on at least one of the information corresponding to one or more of the remaining packets in the sequence of packets and the identified one or more features of the sequence of packets; and
reconstructing the identified one or more missing or corrupted packets based on the identified contextual information and the pre-defined dataset.

5. The method (400) as claimed in claim 4, wherein the contextual information comprises at least one of metadata, timestamps, and device identifiers.

6. An Internet of Things (IoT) gateway device (104) for reconstructing packet data, the IoT gateway device (104) comprising:
a memory (204); and
one or more processors (202) communicatively coupled to the memory (204), wherein the memory (204) comprises a plurality of modules (212) in the form of programmable instructions executable by the one or more processors (202), and wherein the plurality of modules (212) comprises:
a receiving module (214) configured to receive input packet data comprising a sequence of packets;
an identification module (216) configured to identify, using a pre-trained Large Language Model (LLM) (210), one or more missing or corrupted packets in the sequence of packets by processing the received input packet data based on at least one of a pre-defined dataset and a pattern of the sequence of packets; and
a reconstruction module (218) configured to reconstruct, using the pre-trained LLM (210), the identified one or more missing or corrupted packets based on at least one of the pre-defined dataset and information corresponding to remaining packets in the sequence of packets.

7. The IoT gateway device (104) as claimed in claim 6, wherein the plurality of modules (212) further comprises:
a transmitting module (220) configured to transmit, to a server (108), the reconstructed one or more missing or corrupted packets with the remaining packets.

8. The IoT gateway device (104) as claimed in any of claims 6-7, wherein to identify the one or more missing or corrupted packets, the identification module (216) is configured to:
identify one or more features of the sequence of packets, wherein the one or more features comprises at least one of a sequence number, a time of arrival, checksums, a state of packets, and a transmission protocol; and
determine a pattern of the sequence of packets based on the identified one or more features and the pre-defined dataset; and
classify each of the packet in the sequence of packets into at least one of a well-defined packet, noise, and a missing or corrupted packet based on the identified pattern of the sequence of packets.

9. The IoT gateway device as claimed in claim 8, wherein to reconstruct, using the pre-trained LLM, the identified one or more missing or corrupted packets, the reconstruction module (218) is further configured to:
determine contextual information of the identified one or more missing or corrupted packets based on at least one of the information corresponding to remaining packets in the sequence of packets and the identified one or more features of the sequence of packets; and
reconstruct the identified one or more missing or corrupted packets based on the identified contextual information and the pre-defined dataset.

10. The IoT gateway device as claimed in claim 9, wherein the contextual information comprises at least one of metadata, timestamps, and device identifiers.

11. A cloud computing environment (100) comprising:
one or more IOT devices (102a);
an IoT gateway device (104) as claimed in claim 6; and
a cloud server (communicatively coupled to the IoT device via a network, wherein the IoT gateway device is configured to perform a method according to any of the claims 1 to 5.

12. A computer-program product, having machine-readable instructions stored therein, which when executed by the one or more processors, cause the one or more processors to perform a method according to any of the claims 1 to 5.

13. A non-transitory computer readable medium encoded with executable instructions which, when executed by the one or more processors, cause the one or more processors to perform a method according to any one of the claims 1 to 5.
